# FASCICULE DE BREVET EUROPEEN

(11) **EP 0 454 034 B1**
(45) Date de publication et mention de la délivrance du brevet: **22.11.1995**
(21) Numéro de dépôt: 91106452.5
(22) Date de dépôt: 22.04.1991
(51) Int. Cl.: H04B 7/185, G01S 7/02

(54) **Dispositif d'observation radiofréquence de la terre, et système spatial comprenant un tel dispositif**
Einrichtung zur Beobachtung einer von der Erde ausgestrahlten Radiofrequenz und Raumsystem mit einer solchen Einrichtung
Radio frequency earth observation device, and space system with such a device

(30) Priorité: 26.04.1990 FR 9005325
(43) Date de publication de la demande: 30.10.1991
(73) Titulaire: ALCATEL ESPACE, F-92407 Courbevoie Cédex (FR)
(72) Inventeur: Kaced, Jean-Luc, F-31470 Fontenilles (FR); Corain, Alain, F-31120 Portet sur Garonne (FR); Costamagna, Francis, F-31000 Toulouse (FR)
(74) Mandataire: Weinmiller, Jürgen

(56) Documents cités:
- EP-A- 0 017 597
- US-A- 4 499 470
- US-A- 4 668 952
- IEE PROCEEDINGS, vol. 132, no. 7, partie F, décembre 1985, pages 621-625; J.A.V. ROGERS: "ESM processor system for high pulse density radar environments"
- L'ONDE ELECTRIQUE, vol. 52, fasc. 1, janvier 1972, pages 16-23, Paris, FR; F. PENE: "Le programme Météosat"

## Description

L'invention concerne une charge utile de satellite comprenant un dispositif d'observation radiofréquence de la terre, et un système spatial comprenant un tel dispositif.

Une activité radioélectrique peut être caractérisée en termes de :
. niveau moyen ;
. niveau crête ;
. nombre d'impulsions radar ;
. probabilité de recouvrement temporel des impulsions ;

et ceci avec une résolution fréquentielle programmable dans une large bande de fréquence ; ces informations pouvant être instantanées et/ou statistiques.

Dans ce domaine de l'invention des expériences ponctuelles ont été réalisées sur zone limitée en utilisant des instruments connus aéroportés, dans des bandes de fréquence limitées.

Le brevet américain US-A-4 499 470 au nom de STACEY décrit un système de mesure par satellite de la température de l'eau des mers, d'océans, et d'embouchures de fleuves. Ce brevet enseigne l'utilisation d'un récepteur hyperfréquence multi-canaux, avec chaque canal accordé à une fréquence fixe, chaque fréquence étant choisie pour sa capacité de révéler l'une des différentes caractéristiques ou paramètres observables par ces moyens : la température de l'eau, mais aussi la présence de pluies modérées ou torrentielles, de la vapeur d'eau, de la brume ou de la bruine, de la neige...

En outre, le satellite de Stacey reçoit des signaux d'étalonnage qui sont émis par des balises flottantes dotées de moyens de mesures très précis de la température de l'eau, ainsi que de moyens de codage et de transmission des données de température vers le satellite. Ceci correspond à une mission de télécommunications classique par liaison hyperfréquence.

L'article de F. PENE, "Le programme Metéosat" paru dans L'Onde Electrique v.52. fasc.1, pp.16-23 (Janvier 1972) décrit un système d'observation de la terre depuis un satellite en orbite terrestre géostationnaire. Les observations sont effectuées dans la gamme de longueurs d'onde de la lumière visible et de l'infrarouge. Le satellite, qui observe la terre depuis une position fixe sur orbite géostationnaire, est capable de fournir des images de la couverture nuageuse visible depuis cette position fixe (dans un cône de 60° environ). Le satellite étant en position fixe, les données recueillies peuvent être retransmises à une ou plusieurs station(s) au sol en temps réel, sans interruption, pour traitements et archivage. Le satellite est aussi doté de moyens pour la collecte de données transmises depuis d'autres stations au sol, principalement pour effectuer le relais vers la ou les station(s) de traitements et/ou archivage. Cette dernière mission correspond ainsi à une mission de télécommunications par satellite classique.

L'article de J.A.V. Rogers, "ESM processor system for high pulse density radar environments", paru dans les Proceedings de l'IEE, v.132,(7), partie F, pp.621-625 (Décembre 1985), est issu du domaine de la guerre électronique. En effet, l'acronym ESM (Electronic Support Measures en anglais), indique l'appartenance de ces techniques aux domaines d'interventions militaires, par exemple des missions aéroportées en territoire hostile (reconnaissance ou livraison d'armes), ou encore des missions de détection et d'identification d'une plateforme hostile lors d'une pénétration sur un territoire surveillé par le système ESM. Ce système comprend un récepteur radar passif dont les capacités de détection sont conçues pour pouvoir intercepter tous signaux radar d'une plateforme ennemie, en vue de l'identification du radar adverse par ses paramètres radioélectriques (fréquence et puissances d'émission, temps de trajet relatif entre la source primaire et les réflexions éventuelles, cadence de répétition d'impulsions, durée d'impulsions...), ainsi que le renseignement de la position de la plateforme, éventuellement de sa vitesse de déplacement, et de sa trajectoire.

Le document EP-A-0 017 597 au nom de l'Aérospatiale, décrit encore un système d'observations météorologique, comprenant au moins deux satellites dont l'un est en orbite géostationnaire et l'autre en orbite géosynchrone de préférence "anti-équatoriale". Ce deuxième satellite permet notamment la possibilité de prise de vues stéréoscopiques, ainsi que l'observation d'une plus grande partie de la surface du globe terrestre qu'avec un seul satellite en position fixe sur orbite géostationnaire.

Le document US-A-4 668 952 au nom de General Research of Electronics, décrit un détecteur radar qui utilise un balayage en fréquence fourni par un wobulateur local, mélangé aux signaux reçus, pour effectuer une transposition en Fréquence Intermédiaire. Les signaux ainsi transposés sont ensuite appliqués à un filtre passe-bande. Un circuit d'alarme est actionné si, lors de trois balayages successifs, un signal est détecté au même moment dans le cycle du wobulateur (ce qui indique qu'un signal d'une fréquence donnée est présent pendant les trois cycles). L'application visée est apparemment la détection de radars de police, afin de déjouer des contrôles de vitesse automobile. Le critère de la présence d'un signal radar à la même fréquence lors de trois cycles successifs du wobulateur permet d'éviter de déclencher l'alarme (l'avertissement du conducteur) intempestivement sur des signaux qui ne sont, en fait, que du bruit radioélectrique.

L'invention a pour objet de réaliser une cartographie globale de l'activité radioélectrique mondiale, au niveau de la sphère orbitale d'un satellite, d'une façon continue en fréquence depuis quelques dizaines de MHz à quelque dizaines de GHz.

Elle propose à cet effet une charge utile de satellite comportant, un dispositif d'observation radiofréquence de la terre, destiné à être embarqué sur satellite, caractérisé en ce qu'il comprend des moyens pour réaliser une cartographie globale de l'activité radioélectrique mondiale, au niveau de la sphère orbitale d'un satellite, d'une façon continue en fréquence depuis quelques dizaines de MHz à quelque dizaines de GHz, lesdits moyens comprenant :
- au moins une antenne large bande à grande ouverture permettant de couvrir la bande totale de fréquences;
- une tête hyperfréquence large bande à faible facteur de bruit permettant la réception des signaux dans la bande totale de fréquences et la démodulation en fréquence intermédiaire de ces signaux ;
- une source de fréquences large bande générant l'oscillateur local de réception destination de la tête hyperfréquence, le signal étant ainsi ramené dans la bande passante du filtre fréquence intermédiaire ;
- un étage de réception (Fréquence intermédiaire) effectuant le filtrage fréquence intermédiaire en un ou plusieurs canaux adjacents ainsi que la détection d'enveloppe ;
- une chaine de traitement constituée d'autant de canaux de traitement qu'il y a de canaux de filtrage fréquence intermédiaire dans laquelle le signal est échantillonné, numérisé et traité ;
- des circuits réalisant l'interfaçage avec une unité de gestion bord pour le transfert des données de mesure.
- l'unité de gestion bord ;
- une mémoire de masse qui permet le stockage de toutes les télémesures et les données de mesures pendant la durée entre deux passages du satellite au dessus de la station sol ;
- un étage télémesure/télécommande ;
- une unité de contrôle thermique qui permet d'assurer le fonctionnement de l'instrument dans une plage de température donnée.

Elle propose en outre un système d'observation radiofréquence de la terre comprenant un tel dispositif d'observation radiofréquence large bande et qui comporte de plus :
- un satellite dont le dispositif est la charge utile ;
- une station sol de télémesures/télécommandes permettant la gestion du satellite et la réception de la télémesure ;
- une unité informatique de traitement des mesures du dispositif.

Un tel système permet de caractériser et de modéliser statistiquement l'environnement radioélectrique de la terre sur une large bande de fréquences et sur toute la surface de celle-ci.

Avantageusement l'invention permet d'obtenir une connaissance précise, macroscopique, statistique ou en temps réel de l'environnement radioélectrique dans une large bande de fréquences avec les avantages suivants :
- connaissance du brouillage volontaire et involontaire dans une bande de fréquences et sur une zone donnée choisie sur le globe ;
- surveillance d'activité dans une bande de fréquences sur une zone donnée choisie sur le globe ;
- évaluation des dynamiques et de la sensibilité nécessaires aux futurs satellites d'observation radiofréquence.

Les caractéristiques et avantages de l'invention ressortiront d'ailleurs de la description qui va suivre, à titre d'exemple non limitatif, en référence aux figures annexées sur lesquelles :
- la figure 1 représente un synoptique du dispositif de l'invention ;
- la figure 2 illustre le fonctionnement du dispositif de l'invention ;
- la figure 3 représente une vue éclatée d'un microsatellite ;

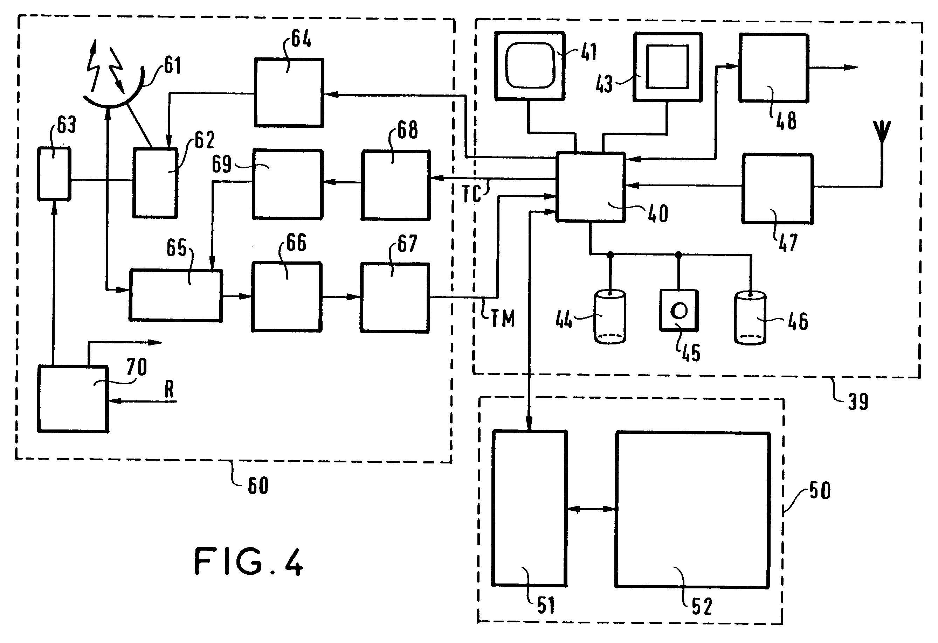

- la figure 4 représente le synoptique d'une station sol.

Le dispositif de l'invention est constitué d'une part, d'au moins une antenne large bande à grande ouverture qui permet d'obtenir une couverture terrestre globale en un minimum de temps et d'autre part, d'un boîtier regroupant l'électronique associée.

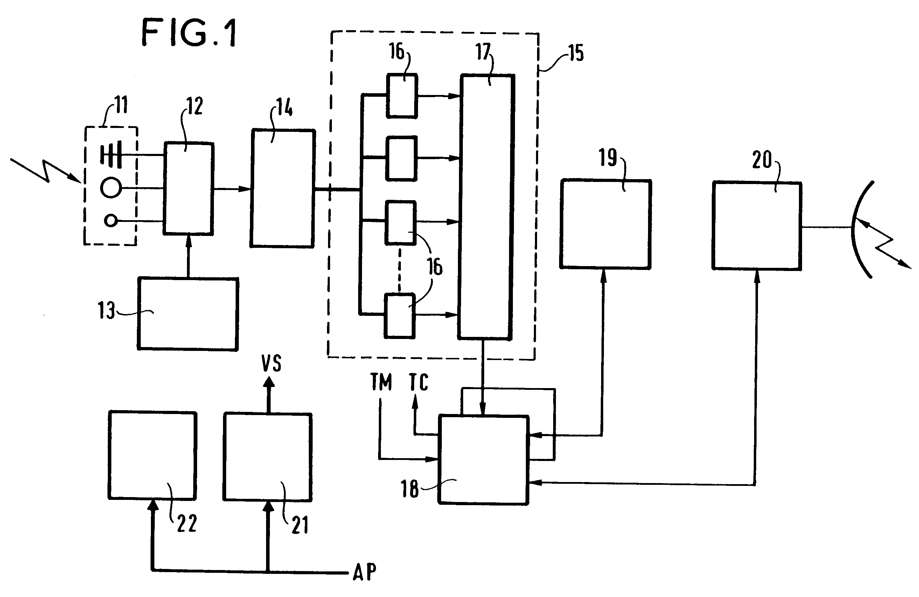

Plus précisément comme représenté à la figure 1, le dispositif d'observation de l'invention est constitué de :
- une ou plusieurs antennes 11 permettant de couvrir la bande totale de fréquences ;
- une tête hyperfréquence 12 large bande à faible facteur de bruit permettant la réception des signaux dans la bande totale de fréquence et la démodulation en fréquence intermédiaire (F.I.) de ces signaux ;
- un synthétiseur de fréquences 13 large bande générant l'oscillateur local de réception à destination de la tête hyperfréquence ; le signal étant ainsi ramené dans la bande passante du filtre F.I. ;
- un étage de réception F.I. 14 (Fréquence Intermédiaire) effectuant le filtrage F.I. en un ou plusieurs canaux adjacents ainsi que la détection d'enveloppe ;
- une chaîne de traitement 15 constituée d'autant de canaux de traitement qu'il y a de canaux de filtrage F.I. Le signal étant échantillonné (16), numérisé et traité ;
- des circuits 17 réalisant l'interfaçage avec une unité de gestion bord 18 pour le transfert des données de mesure ;
- l'unité de gestion bord 18 constituée d'une unité centrale à base de microprocesseur et d'une carte interface permettant le dialogue entre la plate forme et les différentes parties dudit dispositif (par le biais de télécommandes TC, et de télémesures TM), ainsi qu'entre l'unité centrale et la mémoire de masse.
- une mémoire de masse 19 constituée de mémoires RAM ("Random Access memory") statiques qui permet le stockage de toutes les télémesures TM et les données de mesures pendant la durée entre deux passages du satellite au-dessus de la station sol ;
- un étage TM/TC (télémesure/télécommande) 20 qui fait partie de la plateforme ; le dispositif d'observation utilisant les ressources de celle-ci pour recevoir les télécommandes provenant du sol et les télémesures à destination du sol, via une liaison numérique bi-directionnelle ;
- son propre convertisseur continu/continu 21 qui génère les alimentations secondaires à destination des différents éléments du dispositif d'observation ;
- une unité de contrôle thermique 22 qui permet d'assurer le fonctionnement du dispositif dans une plage de températures donnée.

Cette définition du dispositif de l'invention s'accommode de modifications envisageables sur la bande de fréquences totale observée (par la modification ou l'adjonction d'antennes et de voies de réception), sur la résolution de la mesure (par modification du banc de filtres ou adjonction d'un analyseur de spectre plus élaboré), sur la mesure et le nombre de paramètre de l'environnement radioélectrique mesurés et traités (puissance moyenne, niveau crête, nombre d'impulsions présentes, puissance minimale, largeurs minimale et maximale des impulsions présentes etc...) par modification du traitement bord et de l'exploitation sol.

L'invention porte de plus sur un système spatial complet incluant un segment spatial et un segment sol :
- Le segment spatial qui comprend ce dispositif d'observation porté par une plateforme de type microsatellite (masse < 50 kg) ou qui est le passager d'un satellite dédié à une autre mission. Ses caractéristiques de masse, volume et consommation sont minimisées.
- Le segment sol qui comporte une station de télémesure/télécommande du microsatellite ou de télémesure dans le cas d'un satellite-hôte. Les télémesures transmises sont traitées dans cette même station à l'aide d'une infrastructure informatique adaptée (matériel et logiciel d'exploitation).

Le système de l'invention comprend donc :
- un dispositif d'observation radiofréquence large bande (de quelques dizaines de MHz à quelques dizaines de GHz) constituant la charge utile du microsatellite ou la charge utile auxiliaire du satellite-hôte ;
- une plate forme permettant une stabilisation trois axes par gradient de gravité, l'alimentation électrique, le contrôle thermique, la gestion des liaisons sol/satellite et satellite/sol et la gestion bord du satellite complet ou du satellite-hôte, le dispositif d'observation étant, dans ce dernier cas, considéré comme une charge utile auxiliaire ;
- une station sol de télémesures/télécommandes permettant la gestion du satellite et la réception de la télémesure scientifique qui est traitée dans la partie "traitement" de la station ou une station de réception et d'exploitation de la télémesure scientifique du dispositif d'observation dans le cas de l'utilisation d'un satellite-hôte.
- une unité informatique de traitement des mesures de ce dispositif (intégrée dans la station sol de réception de la télémesure satellite) constituée de plusieurs micro-ordinateurs et de logiciels spécifiques de traitement permettant d'obtenir la décommutation du message de télémesure, l'archivage des données de mesures sur support grande capacité, des sorties graphiques des paramètres de l'environnement radioélectrique, de la modélisation statistique de ces paramètres et de la mise à jour périodique de cette modélisation au fur et à mesure de l'arrivée de nouvelles mesures.

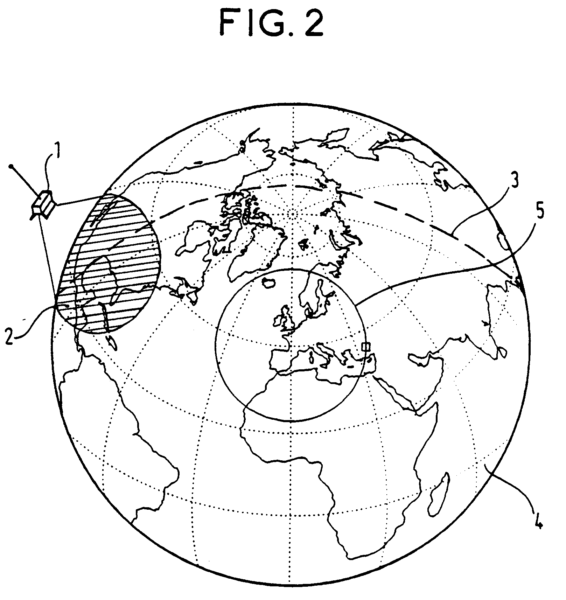

La figure 2 illustre le fonctionnement du système de l'invention dans le cas d'un satellite à défilement avec :
- un satellite 1 ayant une zône de mesure instantanée 2 ;
- la trace 3 au sol d'une orbite de ce satellite 1 autour de la terre 4 ;
- le domaine de visibilité 5 de la station sol.

Le dispositif de l'invention dialogue avec la plateforme (microsatellite ou autre) par le biais de deux liaisons numériques séries TM et TC par lesquelles transitent les télécommandes et les télémesures dédiées à l'instrument (programme de travail de l'instrument, télémesures de servitude et scientifiques).

La plateforme du satellite fournit au dispositif de l'invention une alimentation "primaire" non régulée AP qui est transformée dans le convertisseur continu/continu 21 du dispositif en différentes tensions secondaires VS nécessaires à son fonctionnement.

Le bilan masse, volume, consommation du dispositif est de l'ordre de 15 kg, 20 litres, 20 W pour une bande totale de fréquence observée de 100 MHz à 20 GHz avec une résolution de 25 MHz.

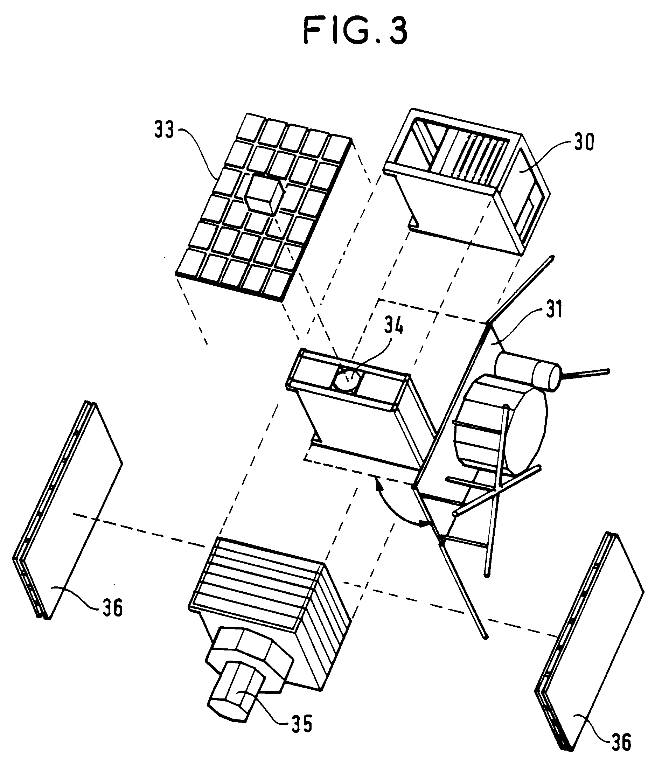

Un micro-satellite, tel que représenté à la figure 3, est constitué de :
- un bloc électronique charge utile 30 comportant toute l'électronique de l'instrument (hors antenne) ;
- un plateau antennes 31 comportant les antennes instrument et les antennes TM/TC du satellite, ce plateau constitue la face "terre" du microsatellite ;
- un bloc électronique plateforme 32 comportant les circuits de conditionnement électrique, le calculateur plateforme, les circuits de contrôle d'attitudes, l'électronique de transmission télémesure et de réception télécommande, les batteries ;
- un générateur solaire 33 constitué par exemple de cinq panneaux 36 à cellules photo-électriques dont deux sont déployables ;
- un mât déroulable 34 avec la masse placée à son extrémité pour permettre une fois déroulé, une stabilisation par gradient de gravité ;
- un système mécanique 35 permettant la fixation et la séparation du satellite avec le lanceur.

Les performances de contrôle d'attitudes sont compatibles des besoins de la mission de l'instrument soit ± 5° en contrôle et ± 1° en restitution sur les trois axes.

Le segment sol est constitué d'une station sol qui doit remplir les fonctionnalités suivantes :
- gestion de la liaison montante et du pointage de l'antenne ;
- gestion de la liaison descendante et du pointage de l'antenne ;
- stockage et archivage des télémesures scientifiques et de servitude ;
- gestion du fonctionnement du satellite :
   . traitement des télémesures de servitude instrument et plateforme ;
   . élaboration et simulation de la séquence de télécommandes ;
- traitement des mesures de l'instrument ;
- sorties des résumés d'exploitation ;
- interface utilisateur/machine pour les tâches ci-dessus explicitées.

Pour remplir ces fonctionnalités, la station sol se décompose en trois parties principales comme suit :
- une partie exploitation 39 qui comprend un calculateur 40 qui gère l'ensemble de la station avec ses périphériques d'interface homme/machine (écran 41, clavier 42, imprimante 43, etc...) et de stockage des informations (disque dur 44, unité disquette 45 et de stockage de masse 46, etc...), ainsi que des sous-systèmes divers (récepteur horaire 47, modem 48, etc...). Elle inclut le logiciel général qui se décompose comme suit :
   . le système d'exploitation multi-tâches ;
   . le logiciel de gestion générale de la station ;
   . le logiciel de commande et de contrôle de la séquence de communications sol/satellite ;
   . le logiciel de traitement des mesures de l'instrument. Ce logiciel inclut notamment une modélisation statistique du rayonnement radioélectrique en tout point de la terre avec une résolution pouvant descendre à 200 km grâce à l'emploi d'algorithmes issus du domaine du traitement de l'image ;
   . les utilitaires divers ;
- une partie émission/réception 60 de la station sol qui est constituée de :
   . une antenne 61 permettant la réception de la liaison descendante (TM) et l'émission de la liaison montante (TC) ;
   . un positionneur 62 permettant de pointer l'antenne en azimut et élévation ;
   . une alimentation 63 spécifique au positionneur ;
   . un circuit de commande d'antennes transcodant les consignes de pointage codées en numérique en signaux de pointage destinés au positionneur ;
   . un convertisseur de fréquences 65 transposant le signal reçu en fréquence basse et le signal émis en fréquence haute ;
   . un étage récepteur 66 qui effectue la démodulation du signal en bande de base ;
   . un synchronisateur de télémesure 67 qui régénère l'horloge de base du signal et décode le signal binaire de télémesure ;
   . un formateur 68 qui code la liaison numérique de télécommande suivant un format donné ;
   . un modulateur/émetteur 69 qui module le signal formaté ;
   . un bloc alimentation 70 qui génère, à partir du réseau R toutes les alimentations secondaires nécessaires ;
- un banc sol 50 qui est constitué des moyens de tests (utilisés lors de l'intégration de la charge utile sur la plateforme) et d'un modèle fonctionnel 52 de l'instrument.

Dans un exemple de réalisation :
- le satellite est un satellite à défilement en orbite quasi-polaire ou polaire (héliosynchrone ou non) avec :
   . une altitude située entre 500 à 1000 km
   . une zone instantanée de mesures maximales (de 5000 à 6700 km de diamètre)
   . une couverture globale de la surface terrestre en 12 heures environ.
- la station sol est une station de commande/contrôle du satellite et d'exploitation des mesures; Elle a une visibilité du satellite toutes les 12 heures environ.

L'instrument selon la revendication 2 peut être embarqué sur un satellite géostationnaire pour effectuer une surveillance constante de la surface terrestre vue.

## Revendications

1. Charge utile de satellite comportant un dispositif d'observation radiofréquence de la terre, destiné à être embarqué sur satellite, caractérisé en ce qu'elle comprend des moyens pour réaliser une cartographie globale de l'activité radioélectrique mondiale, au niveau de la sphère orbitale d'un satellite, d'une façon continue en fréquence depuis quelques dizaines de MHz à quelque dizaines de GHz, lesdits moyens comprenant :
- au moins une antenne de réception (11) large bande à grande ouverture permettant de couvrir la bande totale de fréquences;
- une tête hyperfréquence (12) large bande à faible facteur de bruit permettant la réception des signaux dans la bande totale de fréquences et la démodulation en fréquence intermédiaire de ces signaux;
- une source de fréquences (13) large bande générant l'oscillateur local de réception à destination de la tête hyperfréquence, le signal étant ainsi ramené dans la bande passante du filtre fréquence intermédiaire;
- un étage de réception (14) (Fréquence Intermédiaire) effectuant le filtrage fréquence intermédiaire en un ou plusieurs canaux adjacents ainsi que la détection d'enveloppe;
- une chaîne de traitement (15) constituée d'autant de canaux de traitement qu'il y a de canaux de filtrage fréquence intermédiaire dans laquelle le signal est échantillonné, numérisé et traité;
- des circuits (17) d'interface avec une unité de gestion bord pour le transfert des données de mesure;
- une unité de gestion bord (18);
- une mémoire de masse (19) qui permet le stockage de toutes les télémesures et les données de mesures pendant la durée entre deux passages du satellite au-dessus d'une station fixée au sol;
- un étage télémesure/télécommande 20;
- une unité de contrôle thermique (22) qui permet d'assurer le fonctionnement de l'instrument dans une plage de température donnée.

2. Système de satellites d'observation de la terre, caractérisé en ce qu'il comporte:
- au moins un satellite dont la charge utile comprend un dispositif selon la revendication 1 ; caractérisée en ce qu'il comporte:
- au moins une station sol de télémesures ou/et télécommandes permettant la gestion du satellite et la réception de la télémesures et le traitement des mesures du dispositif.

3. Système selon la revendication 2, caractérisé en ce que ledit satellite est un micro satellite.

4. Système selon la revendication 3, caractérisé en ce que ledit micro satellite comprend en outre :
- un bloc électronique charge utile (30);
- un plateau antennes (31) comportant des antennes instrument (11) et des antennes affectées aux télémesures et télécontrole du satellite;
- un bloc électronique plateforme (32) comportant des circuits de conditionnement électrique, un calculateur plateforme, des circuits de contrôle d'attitudes, une électronique de transmissions télémesure et de réception télécommande des batteries;
- un générateur solaire (33) constitué de plusieurs panneaux (36) à cellules photoélectriques dont certains sont déployables;
- un système mécanique (35) permettant la fixation et la séparation du satellite avec le lanceur.

## Patentansprüche

1. Nutzlast für einen Satelliten mit einer Vorrichtung zur Funküberwachung der Erde, die vom Satelliten getragen werden soll, dadurch gekennzeichnet, daß sie Mittel aufweist für eine globale kartographische Erfassung der funkelektrischen Aktivität der Erde in Höhe der orbitalen Sphäre eines Satelliten kontinuierlich in einem Frequenzband von einigen zehn Megahertz bis zu einigen zehn Gigahertz, wobei zu diesen Mitteln gehören:
- mindestens eine Breitband-Empfangsantenne (11) mit großem Öffnungswinkel, die das gesamte Frequenzband überdecken kann,
- ein breitbandiger rauscharmer Mikrowellenkopf (12), der für den Empfang der Signale im gesamten Frequenzband und für die Demodulation dieser Signale im Zwischenfrequenzband bestimmt ist,
- eine breitbandige Schwingungsquelle (13), die den örtlichen Empfangsoszillator für den Mikrowellenkopf bildet, so daß das Signal in das Durchlaßband des Zwischenfrequenzfilters gelangt,
- eine Empfangsstufe (14) (Zwischenfrequenz), die eine Filterung im Zwischenfrequenzband in einem oder mehreren benachbarten Kanälen durchführt, sowie die Hüllkurve erfaßt,
- eine Verarbeitungskette (15), die aus ebensovielen Verarbeitungskanälen besteht, wie es Zwischenfrequenzkanäle gibt, wobei diese Kette das Signal tastet, digitalisiert und verarbeitet,
- Schnittstellenschaltungen (17) bezüglich einer Verarbeitungseinheit an Bord des Satelliten für die Übertragung der Meßdaten,
- eine Verwaltungseinheit (18) an Bord des Satelliten,
- ein Massenspeicher (19), der alle Fernmeßwerte und die Meßdaten während der Dauer zwischen zwei Durchgängen des Satelliten oberhalb einer Bodenstation speichern kann,
- eine Fernmeß-Fernsteuerstufe (20),
- eine Wärmeregeleinheit (22), die den Betrieb des Instruments in einem gegebenen Temperaturbereich gewährleistet.

2. Satellitensystem zur Erdbeobachtung mit mindestens einem Satelliten, dessen Nutzlast eine Vorrichtung nach Anspruch 1 enthält, dadurch gekennzeichnet, daß es mindestens eine Bodenstation für die Fernmessung und/oder Fernsteuerung enthält, von der aus der Satellit überwacht werden kann und die die Fernmeßwerte von der Vorrichtung empfangen und verarbeiten kann.

3. System nach Anspruch 2, dadurch gekennzeichnet, daß der Satellit ein Mikrosatellit ist.

4. System nach Anspruch 3, dadurch gekennzeichnet, daß der Mikrosatellit weiter enthält:
- einen Elektronikblock (30), der zur Nutzlast gehört,
- eine Antennenplattform (31) mit Instrumentenantennen (11) und Antennen für die Fernmessung und die Fernsteuerung des Satelliten,
- einen elektronischen Plattformblock (32) mit Schaltungen zur elektrischen Stromversorgung, einem Plattformrechner, Schaltungen zur Lagekontrolle, einer Elektronik zur Übertragung der Fernmeßwerte und zum Empfang der Fernsteuersignale für die Batterien,
- einen Solargenerator (33), bestehend aus mehreren Paneelen (36) mit fotoelektrischen Zellen, von denen einige entfaltbar sind,
- ein mechanisches System (35), das die Befestigung des Satelliten an der Rakete sowie dessen Loslösung erlaubt.

## Claims

1. Satellite payload including a radio frequency Earth remote sensing device adapted to be embarked on a satellite characterised in that it comprises means for producing a global map of worldwide radio frequency activity at the level of the orbital sphere of a satellite, in a continuous range of frequencies from a few tens of MHz to a few tens of GHz, said means including:
- at least one wide-aperture wide-band receive antenna (11) covering the whole band of frequencies;
- a low-noise wide-band microwave head (12) for receiving signals in the entire band of frequencies and demodulating the intermediate frequency signals;
- a wide-band frequency source (13) generating the receive local oscillator signal supplied to the microwave head, whereby the signal is translated into the passband of the intermediate frequency filter;
- an intermediate frequency receive stage (14) filtering the intermediate frequency signals in one channel or a plurality of adjacent channels and performing envelope detection;
- a processor system (15) comprising the same number of processing channels as there are intermediate frequency filter channels and in which the signal is sampled, digitised and processed;
- interface circuits (17) for an onboard control unit for measurement data transfer;
- an onboard control unit (18);
- a backing store (19) for storing all telemetry and measurement data between two passes of the satellite over a fixed ground station;
- a telemetry/telecontrol stage (20);
- a thermal control unit (22) enabling the instrument to operate in a given temperature range.

2. Earth remote sensing satellite system characterised in that it comprises:
- at least one satellite whose payload includes a device according to claim 1; characterised in that it includes:
- at least one telemetry and/or telecontrol ground station for controlling the satellite and receiving telemetry and processing measurements from the device.

3. System according to claim 2 characterised in that said satellite is a microsatellite.

4. System according to claim 3 characterised in that said microsatellite further comprises:
- a payload electronic unit (30);
- an antenna face (31) comprising instrument antennas (11) and satellite telemetry and telecontrol antennas;
- a platform electronics unit (32) comprising electrical conditioning circuits, a platform computer, attitude control circuits, telemetry transmission electronics and telecontrol receive electronics, and batteries;
- a solar generator (33) comprising a plurality of photo-electric cell arrays (36) some of which are deployable;
- a mechanical system (35) for fixing the satellite to and separating the satellite from the launch vehicle.
